(19) Europäisches Patentamt / European Patent Office / Office européen des brevets

(11) **EP 3 791 149 B1**

(12) **EUROPEAN PATENT SPECIFICATION**

(45) Date of publication and mention of the grant of the patent:
**27.11.2024 Bulletin 2024/48**

(21) Application number: **19722153.4**

(22) Date of filing: **10.05.2019**

(51) International Patent Classification (IPC):
**G01M 3/20** *(2006.01)*      **G01M 3/32** *(2006.01)*
**H01M 10/42** *(2006.01)*

(52) Cooperative Patent Classification (CPC):
**G01M 3/207; G01M 3/329; H01M 10/4228;**
**H01M 10/4285;** H01M 10/052; Y02E 60/10

(86) International application number:
**PCT/EP2019/062088**

(87) International publication number:
**WO 2019/215339 (14.11.2019 Gazette 2019/46)**

(54) **METHOD FOR LEAK TESTING A BATTERY CELL**

VERFAHREN ZUR DICHTHEITSPRÜFUNG EINER BATTERIEZELLE

PROCÉDÉ DE TEST DE FUITE D'UN ÉLÉMENT DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2018  IT 201800005260**

(43) Date of publication of application:
**17.03.2021  Bulletin 2021/11**

(73) Proprietor: **Marposs Societa' Per Azioni**
**40010 Bentivoglio (BO) (IT)**

(72) Inventor: **VOLLARO, Giuseppe**
**40068 San Lazzaro di Savena (BO) (IT)**

(56) References cited:
**EP-A1- 1 841 002      EP-A2- 0 791 814**
**WO-A1-02/37098       WO-A1-99/46572**
**GB-A- 2 142 150      KR-B1- 101 198 857**
**US-A- 5 317 900**

## Description

TECHNICAL FIELD

The invention relates to a method for leak testing one or more battery cells. This method enables to check the leak tightness of the entire cell, or even only a portion thereof, when the components (such as anode, cathode and separator) and the chemical substances (such as electrolytes) necessary to its operation have already been inserted in the cell and the cell has been sealed.

The leak testing is generally important for all the different types of batteries in order to guarantee the absence of leakages of electrolytes contained in the battery that may be corrosive and whose leakage may in any case affect overtime the correct functionalities of the battery.

This type of testing is even more fundamental to batteries, such as lithium-ion batteries, for which it is absolutely necessary to ensure that the environmental humidity or other chemical compounds coming from the outside cannot enter the battery, more particularly one or more cells forming the battery. This is to prevent the chemical substances, which are inside the battery or may form during its use, from coming into contact with water or other chemical compounds and reacting violently, or in any case affecting the functionalities of the battery.

BACKGROUND ART

Different types of techniques are currently used for leak testing batteries, but all of them require that each cell inside the battery has an inlet hole, that is an opening in the cell casing which makes the interior of the cell accessible and places it in communication with the external environment. Some examples of prior art are described hereinafter.

a. Testing the battery cell using air

It is possible to test only the casing of the cell by supplying compressed air inside the cell, sealing the cell inlet hole and measuring the pressure drop or the flow rate possibly caused by a leak in the casing.

b. Testing of the battery cell before the electrolyte is inserted into the cell by using helium as tracer gas

It is possible to test the empty cell casing or the casing that already contains anodes, cathodes and separators at a stage in which the electrolyte has not yet been inserted and the inlet hole through which the electrolyte is inserted in the cell is thus still open.

The cell is inserted in a vacuum chamber or in a storage chamber (depending on the leakage level that must be detected). Helium under pressure is then inserted inside the cell and the quantity of helium flowing from the inside of the cell to the chamber through the possible leak is measured by means of a mass spectrometer.

The main drawback of the two above-mentioned techniques is that the leak test is carried out on an unfinished cell, that is a cell which has not yet been sealed. It is therefore not possible to make a test on a cell in which the electrolyte has already been inserted and whose inlet hole has been sealed permanently.

c. Testing the finished cell, after the electrolyte has been inserted and the cell has been sealed, by inserting helium as tracer gas in the cell during the step of the electrolyte insertion

As helium is an inert gas, it is theoretically possible - for the purposes of the leak test that will be carried out subsequently - adding a certain quantity of helium inside the cell while the electrolyte is inserted and before the inlet hole of the cell is sealed. After the cell has been positioned inside a vacuum chamber, it is possible to detect by means of a mass spectrometer the helium that possibly flows from the cell to the vacuum chamber through a possible leak.

The main drawback of this technique is that it is necessary to insert - for the sole purpose of leak testing - a further gas, that is the tracer gas, into the cell during a different stage of the battery production that occurs before the leak test stage and is typically performed by a third party. Moreover, the described technique might be applied to certain types of batteries having a rigid casing with an inner free space which can contain the tracer gas, but it might not be applied to pouch cells.

d. Testing the finished cell after the electrolyte has been inserted and the inlet hole of the cell has been sealed by using a technique called "bombing"

When it is not possible to add helium or another tracer gas inside the cell during the electrolyte insertion step, it is possible to use the technique called "bombing" to carry out the leak test employing helium as tracer gas.

The battery cell is first inserted into a bombing chamber in which helium under pressure is injected. If a leak is present in the cell, a part of the helium flows from the chamber inside the cell. The quantity of helium entering the cell depends not only from the free space inside the cell but also by the pressure level inside the chamber and the time of bombing.

After the bombing step, the battery cell is inserted into a vacuum chamber where the leakage level is measured by tracing by means of a mass spectrometer the quantity of helium flowing from the inside of the cell to the vacuum chamber through the leak present in the cell.

The main drawbacks of this technique are the overall cycle time, which could be very long and not compatible with industrial processes, and the acceptable overpressure level in the bombing chamber which must not exceed levels which could permanently deforming the casing of the cell. Further prior art leak detection methods are known from KR101 198857B1 and WO99/46572A1.

## DISCLOSURE OF THE INVENTION

Object of the present invention is to provide a method as defined in independent claim 1.

The leak test according to the invention is carried out on the finished cell, that is a cell in which the electrolyte has been inserted into the casing of the cell and the inlet hole in the casing has been sealed. The test can be carried out at any time, regardless of whether the cell has been subjected to an activation process (a step called "formation"), by detecting the leak of aeriform elements, such as gases and/or vapors, of various nature from the inside of the cell.

## BRIEF DESCRIPTION OF THE DRAWINGS

The invention is now described in detail with reference to embodiments illustrated in the annexed drawings, to be understood as exemplary and nonlimiting, wherein:

- Figure 1 schematically shows a first embodiment of a leak testing system according to the present invention, in which a cell to be checked is positioned inside a vacuum chamber;
- Figure 2 schematically shows a second embodiment of a leak testing system according to the present invention, in which a portion of a cell is inside a vacuum chamber; and
- Figure 3 schematically shows a detail of Figure 2.

## BEST MODE FOR CARRYING OUT THE INVENTION

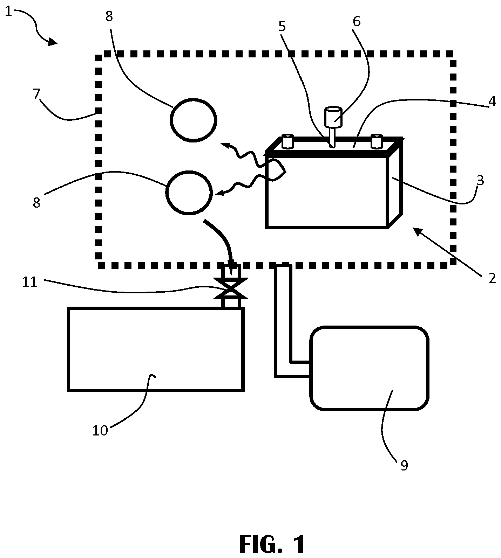

A system for leak testing a battery cell 2 is shown in simplified way in figure 1 and is indicated as a whole with reference number 1.

The cell 2 comprises a casing 3 closed by a cover 4 and provided, at the cover 4, with an inlet hole, schematically shown and indicated with reference number 5 in the figure, through which a chemical substance called electrolyte, for example a liquid electrolyte, can be inserted into the casing 3.

In all the currently designed batteries, more specifically inside the casing of the single cell, an electrolyte composed of particular salts dissolved in one or more solvents, typically of organic nature, is inserted.

In lithium-ion batteries, for example, mixtures of two or more electrolytes such as Ethylene carbonate, Propylene carbonate, Vinylene carbonate, Dimethyl carbonate, Ethyl Methyl Carbonate, Diethyl Carbonate, are typically used.

After the electrolyte has been inserted into the cell, the inlet hole 5 in the cover 4 is sealed with a sealing closure element 6 which prevents substances present in the cell 2 to come into contact with the environment outside the cell 2. Hereinafter "finished cell" means a cell that has already been subjected to the electrolyte insertion step and the sealing step. The leak test according to the present invention is applied to such finished cell and is carried out by detecting aeriform elements - which are schematically shown in figure 1 by circles and indicated with reference number 8 - such as gases and/or vapors which flow out of the cell 2 if a leak/leaks is/are present in the cell, for example in the closure element 6 sealing the inlet hole 5, in the casing 3 or in cover 4. The detected gases and/or vapors may have different origin as explained in more detail hereinafter.

The cell 2 is inserted in a vacuum chamber, schematically shown with a dashed box and indicated in figure 1 with reference number 7, to create a pressure difference between the inside of the cell 2, which has a higher pressure, and the external environment, in this case consisting in the inside of the vacuum chamber 7.

This pressure difference causes one or more substances contained in the liquid electrolyte inside the cell to partially vaporize, and/or gases- deriving from the formation process or generated spontaneously - which are partially dissolved in the electrolyte inside the cell to revert to the gaseous state.

The pressure difference is created in a known way inside the vacuum chamber by means of a vacuum pump 9 connected thereto. The action of the vacuum pump 9 during the testing cycle allows to keep a constant pressure level within the vacuum chamber 7 for the entire duration of the cycle. The pressure difference between the inside of the cell 2 and the external environment (i.e. the inside of the vacuum chamber 7) eases the flow of substances, in the gaseous or vapor state, from the inside of the cell 2 to the vacuum chamber 7.

These gases and/or vapors 8 are then evacuated from the vacuum chamber 7 by means of suitable pumping systems and conveyed to a detecting and measuring instrument 10, for example a quadrupole mass spectrometer. Such pumping systems may comprise, for example, a further vacuum pump (not shown in the figures), whose size and flow rate are smaller than the vacuum pump that create the pressure difference inside the vacuum chamber, which may be connected to the mass spectrometer 10 or be an integral part of the latter. A connection valve (shown very schematically and indicated with reference number 11 positioned between the pumping systems and the spectrometer 10 enables or interrupts the connection between the vacuum chamber 7 and the mass spectrometer 10.

The pressure difference, that is the pressure difference that has to be induced between the inside of the vacuum chamber and the inside of the cell to be checked, varies as a function of the aeriform element that must be detected and may be determined either when the element to be detected is identified or when the system is designed, for example depending on the type of cell to be checked.

According to the leak testing method of the present invention, the mass spectrometer is programmed to detect gases and/or vapors that may leak from the cell if there are leaks. As already explained, the detected gases and/or vapors derive from the components and/or the substances that have been inserted in the cell before sealing the latter and are necessary to its operation. The cell to be checked is positioned in such a way that it is inside the vacuum chamber. After the cell has been positioned, the vacuum chamber is sealed. According to the method of the present invention, the pressure inside the vacuum chamber 7 is decreased, for example by means of the vacuum pump 9, to a level lower than the pressure inside the cell 2 to be checked so that gases and/or vapors leak out of the cell.

The gases and/or vapors leaked out of the cell 2 are detected by the mass spectrometer 10 and, after the processing of values corresponding to the detected gases and/or vapors, the presence of leaks in the cell is identified by comparing the processed values with preset threshold values.

It is possible to program the spectrometer in such a way that during the leak test both gases and vapors are detected simultaneously.

According to one of the embodiments, the spectrometer can be programmed in such a way that the system detects first the gases, so as to identify even very small leaks, and second the vapors so as to identify possible larger leaks.

Indeed, in the event of gross leaks possible gases inside the cell escape more rapidly from the latter and the probability to detect, during the leak test quantities of gases sufficient to indicate a leak is lower. It is also possible, according to a different embodiment, detecting first the vapors and second the gases.

As mentioned briefly above, the aeriform elements - gases and vapors - detected during the leak test derive from substances and/or components which are already present in the cell and are necessary to its operation. These elements can have different origin.

The detected vapors may originate, for example, from substances, such as solvents, contained in the electrolyte inserted into the cell during the normal production process. Since such substances are usually rather volatile, it is possible to exploit their vaporization to carry out the leak test.

The at least partial vaporization of such substances is due to the pressure variation induced inside the vacuum chamber.

If a leak is present in the portion of the cell casing containing the electrolyte, the electrolyte can escape from the cell not in the form of vapor but in the form of liquid. In this case the depression induced in the vacuum chamber causes the vaporization of the electrolyte inside the vacuum chamber.

If there is a leak in the part of the casing that doesn't contain the electrolyte, for example it is located in the inlet hole of the cover or in the cover itself, the vaporization of the substances contained in the electrolyte, caused by the depression induced in the vacuum chamber, takes place inside the cell and the substances that escape from the cell are already in the form of vapors.

It is thus possible to identify a leak in the cell by detecting the substances contained in the electrolyte in the form of vapor.

The gases detected during the leak test according to the invention may be gases that are already present in the cell and are derived from chemical reactions that are generated spontaneously inside the cell. Or they may be gases that are generated during an activation process of the battery - called "formation process" -consisting in subsequent charge / discharge cycles to which sealed cells are generally put through.

Normally, during the formation process gases form, whose actual composition and quantity depend on the type of electro-chemical reaction occurring inside the cell, but which generally include substances such as $CH_4$, $C_2H_6$, $C_3H_8$, $C_4H_{10}$, $CO_2$, $CO$, $H_2$. In pouch cells the excess quantity of these gases are normally eliminated, but a part remains in any case dissolved inside the electrolyte.

Similarly to what happens when vapors are detected, the depression induced in the vacuum chamber causes the gases to revert to the gaseous state, if in the time interval between the formation process and the leak test these gases have reverted to the liquid state and are dissolved in the electrolyte, and to escape from the cell if there are leaks.

As previously stated, the mass spectrometer must be programmed so as to detect specific gases and/or vapors during the leak test. If the substances contained in the cell and thus the gases and/or vapors to be detected are not known a priori, at first a test may be carried out on a cell with a leak in order to identify the gases and/or vapors that have to be detected.

After the substances that must be detected to measure the leak rate have been identified, the spectrometer is suitably programmed to detect these substances only.

The spectrometer can also be subjected to a calibration operation during which it is calibrated for each of the gas and/or vapors that must be detected during the leak test.

During the calibration operation, a sample cell with a known leak rate, that is a quantified leak rate or a maximum acceptable leak rate, is positioned inside the vacuum chamber and is put through a leak test cycle during which the gases and/or vapors referring to that specific cell are detected. If the sample cell with a known leak rate is not available, a mechanical piece - as explained in more detail hereinafter - equivalent to a cell containing the same gas and/or the same vapor that must be detected and provided with a known leak rate may be used.

The mechanical piece is positioned inside the vacuum chamber and subjected to a test cycle in order to calibrate the spectrometer.

The test is carried out under the same pressure conditions of the vacuum chamber which will then be used for the actual leak test carried out on the cells to be checked. The measurement of the spectrometer is correlated with the known leak rate, in order to find a correlation between the known leak rate, or leakage level, and the spectrometer reading. In other words, for each detected aeriform element the reading $V_o$ of the spectrometer correlated to the known lake rate $L_0$ of the sample cell is detected and stored, and a transduction coefficient K relating to the ratio between the known leak rate and the corresponding spectrometer reading is calculated. The calculated transduction coefficient K is then applied to the measurements carried out subsequently by the spectrometer. The actual amount of the detected leak rate thus corresponds to the ratio between the instrument reading V relating to the cell that is being checked and the transduction coefficient K calculated during the calibration phase, according to the formula shown below that also takes into account a possible offset P and a correction coefficient Q.

$$L = (Q \times K \times V) + P$$

wherein $K_0 = L_0 / V_0$

The operation is repeated for each of the gases and/or vapors that must be detected during the leak test that will be carried out on the cells to be checked. In this way the leak rate corresponding to the spectrometer reading is defined for each of the gases and/or vapors which are detected during the leak test.

If a sample cell (with a known leak rate) is not available and the cell to be tested is of very small size, it is possible to create a mechanical piece with a known leak rate that replaces the sample cell. This piece is made by making a hole in the casing of the cell to be checked in order to create a leak (which is much larger than it would actually have been, because it is not possible to make a sufficiently small hole) and position such a cell in a sealed container which is connected to the external environment only by means of a known capillary element (commonly used in leak tests) which represents a known and certified leak rate for the gases and/or vapors that must be detected during the leak test. After such container (containing the cell with the leak) is inserted in the vacuum chamber, the test system is calibrated as described above.

If a sample cell or an equivalent mechanical piece with a known leak rate are not available, the calibration operation can be carried out, according to an alternative embodiment, by inserting directly into the vacuum chamber a chemical compound with a predetermined chemical composition through a capillary element that constitutes a known leak rate in relation to a specific chemical element, for example helium. The chemical composition of the chemical compound which is inserted in the vacuum chamber is defined a priori such that it includes known proportions of helium, that is the chemical element in relation to which the capillary element constitutes a known leak rate, and the gases/vapors which must be detected during the leak test. The chemical compound is contained in a reservoir which is connected to the vacuum chamber through the capillary element and a suitable sectioning valve. During the calibration phase, after the valve has been opened, the chemical compound flows into the (empty) vacuum chamber and the mass spectrometer takes a reading for all the chemical elements included in the compound. Since the leak rate associated with helium is known, it is possible to determine the leak rates also associated with the gases and/or vapors contained in the chemical compound and with reference to which the calibration must be carried out. The leak rate that is associated with such gases and/or vapors is determined on the basis of the same proportionality relationships between helium and gases and/or vapors contained in the chemical compound.

The main advantage of the method according to the invention is that the leak test can be carried out on any type of finished cell, during different stages of the process (independently from the performance of the formation process), for any type of chemical composition and components (anode, cathode, electrolyte) inside the battery cell(s) and for any type of battery structure (prismatic, cylindrical, button, pouch, etc.), by calibrating the spectrometer in a simple and suitable way so that it detects different substances depending on the gases and/or vapors that must be detected and derive from the components and/or substances present in the cell.

In the embodiments described above, the detection of gases and/or vapors is carried out by means of a quadrupole mass spectrometer, but different techniques and instruments can be used, for example a gas chromatograph.

According to an alternative embodiment, a purge or cleaning cycle can be carried out between a leak test cycle and the next. The purge cycle has the purpose of removing from the system components, for example from the vacuum chamber, the spectrometer and the pumping systems, possible aeriform elements escaped during previous leak test cycles. Such elements could contaminate the system and affect the subsequent test cycles.

If during a previous leak test carried out on a sample cell with a leak a considerable quantity of gases was released inside the system, these gases could remain inside the components of the system even after the test cycle is finished and their presence could be detected also during subsequent tests, thus compromising the reliability of the test results.

The purge cycle is used to remove any contamination of the system before carrying out a new test.

The purge cycle can be carried out before the cell to be tested is positioned in the vacuum chamber, or after it has already been positioned and before the leak test starts.

If the cell to be tested has already been positioned in the vacuum chamber, during the purge cycle the gases/vapors present in the vacuum chamber are evacuated by means of the vacuum pump, keeping closed the connection valve connected to the mass spectrometer.

After the pressure inside the vacuum chamber has been decreased to a suitable value, an inert gas, such as helium or argon, is injected into the vacuum chamber. The pressure inside the vacuum chamber then increases until a preset pressure level is reached.

The vacuum pump is then started again and the pressure inside the vacuum chamber is decreased until a predetermined vacuum level for carrying out the leak test is reached . During this operation all the contaminants present in vacuum chamber, that is the gases/vapors possibly escaped from the tested cell during the previous test cycle, are diluted by the inert gas. The percentage of residual contaminants after the predetermined vacuum level has been reached is consequently reduced to an acceptable level. At this stage the connection valve connected to the spectrometer can be opened and the leak test is carried out.

The same operation can be carried out when the vacuum chamber is empty, that is before the cell to be checked is positioned in the vacuum chamber in order to purge the vacuum chamber and acquire the background level of the vacuum chamber in relation to the presence of the specific aeriform elements (gases and vapors) which are detected during the leak test. "Acquire the background level" means to detect, after an appropriate level of pressure has been induced inside the vacuum chamber, the chemical elements that are structurally present in such vacuum chamber as they depend on physical and structural characteristics of the internal environment of the chamber and that could affect the reading of the instrument. The leak rate that must be associated with the cell to be checked indeed corresponds to the leak rate detected by the spectrometer from which the value associated with the background level of the vacuum chamber has been subtracted.

The step of acquiring the background level of the vacuum chamber, which must be performed when the cell to be checked has not yet been inserted into the vacuum chamber, has been described with reference to the performance of the purge cycle of the entire test system, but it can also be performed during the calibration and/or before carrying out every leak test.

To prevent the contamination of the test system components due to the presence of cells which have a large or gross leak, the claimed invention proposes to preliminarily check the pressure level inside the vacuum chamber by checking if the pressure remains constant after the cell has been inserted in the vacuum chamber.

This preliminary check can be carried out as the initial step of the leak test or be integrated in the purge cycle of the vacuum chamber described above.

After a cell has been inserted in the vacuum chamber, the preliminary check cycle consists in decreasing the pressure level inside the vacuum chamber by means of the vacuum pump, keeping closed the connection valve connecting the mass spectrometer to the vacuum chamber.

After a suitable vacuum level has been reached inside the vacuum chamber, the vacuum pump is stopped and it is checked if the pressure level remains constant inside the vacuum chamber over a suitable period of time.

If the cell has a gross leak, the flow rate of the gases escaping from the cell is such as to cause the pressure level inside the vacuum chamber to increase significantly. In this case the leak test can be interrupted and it is not necessary to detect the gases and/or vapors by means of the mass spectrometer. Since the connection valve which connects the vacuum chamber to the spectrometer has not been opened, the spectrometer is protected from the risk of being contaminated excessively.

The leak testing system and method described herein refer to the test of a single battery cell. However, it is possible to position inside the vacuum chamber and test several cells simultaneously. In this case the system gives a general indication of the leak rate without indicating which cell has actually a leak. To have information on the leak rate of the single cell it is necessary to subject the latter to a subsequent, dedicated leak test, similar to the previous one.

The embodiments of the present invention described up to now refer to the leak test of a parallelepiped cell contained for example in a lithium-ion battery. The leak testing system and method according to the invention can also be applied to batteries with a different shape and/or composition, such as solid-state batteries.

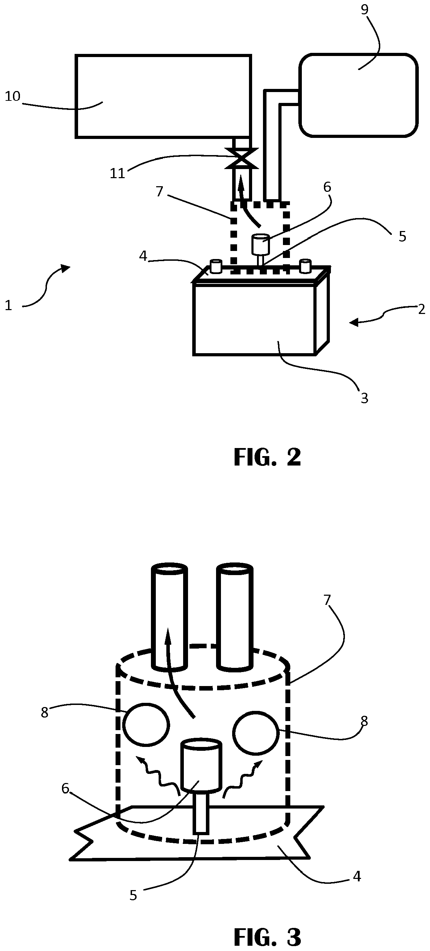

The above described leak testing system and method apply also when not a whole cell but rather a portion of the cell is subjected to the leak test. An embodiment of this type is shown schematically in figure 2 and in figure 3 (the system components are indicated by the same reference numbers used in figure 1) where the cell portion that must be checked is localized around the closure element of the inlet hole 5. In this case a small vacuum chamber 7 is positioned at the cell portion to be tested.

The vacuum chamber 7 houses the area of the cell 2 comprising the cell portion to be checked. The vacuum chamber 7 is positioned at the cell portion to be tested and is sealed to the surface of the cell 2, for example by means of a sealing element such as a gasket. In this case one of the walls of the vacuum chamber 7 consists of a wall portion of the cell 2. The cell portion is leak tested by performing the leak test method described above according to the invention. The embodiment herein described and shown in figures 2 and 3 allows to considerably reduce the dimensions of the vacuum chamber and consequently the area inside which it is necessary to induce a vacuum, thereby considerably shortening time and cost of the leak test.

## Claims

1. A method for leak testing a cell (2) of a battery, said cell (2) being sealed and comprising components and substances which are necessary to the operation of the battery, by means of a leak testing system (1) comprising a vacuum chamber (7) and a detecting and measuring instrument (10), the method including the following steps, not necessarily in that order:

   - programming the detecting and measuring instrument (10) to detect gases and/or vapors that can leak from said cell (2) to be checked, said gases and/or vapors deriving from the components and/or the substances inside in the cell (2);
   - positioning said cell (2) in such a way that at least one portion of the cell (2) is inside the vacuum chamber (7);
   - sealing said vacuum chamber (7);
   - decreasing the pressure inside the vacuum chamber to a lower level than the level of pressure inside the cell (2) to be checked, said lower level being such that the gases and/or vapors (8) leak from said cell (2) if a leak is present;
   - detecting said gases and/or vapors (8) by means of the detecting and measuring instrument (10); and
   - identifying the presence of leaks by comparing values corresponding to said detected gases and/or vapors to predetermined threshold values;

   **characterized in that**
   after said cell (2) to be checked has been positioned and the pressure inside the vacuum chamber (7) has been lowered, before detecting the gases and/or the vapors (8) a preliminary check is performed to check that the pressure level is maintained inside the vacuum chamber (7) in order to prevent contamination of the leak testing system (1), said preliminary check including the steps of:

   - monitoring over a suitable period of time the pressure inside the vacuum chamber (7) while keeping closed the connection between said vacuum chamber (7) and the detecting and measuring instrument (10); and
   - interrupting the leak test if the pressure inside the vacuum chamber (7) increases significantly because a large leak is present in the cell (2).

2. The method according to claim 1, wherein in the step of decreasing the pressure inside the vacuum chamber (7) the pressure level is such that the gases and/or vapors (8) are generated inside the cell (2).

3. Method according to claim 1 or claim 2, wherein said detected gases are gases that are generated inside the cell (2) during a formation process to which the cell (2) is subjected.

4. The method according to claim 1 or claim 2, wherein said detected gases are gases that are generated spontaneously inside the cell (2).

5. The method according to any one of the proceeding claims, wherein said cell (2) to be checked is entirely positioned inside the vacuum chamber (7).

6. The method according to any one of the preceding claims, wherein the step of programming the detecting and measuring instrument (10) to detect gases and/or vapors is preceded by the step of identifying the gases and/or vapors (8) that said detecting and measuring instrument (10) detects by performing a preliminary test.

7. The method according to any one of the preceding claims, including the further step of calibrating the detecting and measuring instrument (10) for each of the gases and/or vapors (8) that must be detected by performing a leak test cycle on a sample cell having known leak rate.

8. The method according to any one of the preceding claims, wherein the detecting and measuring instrument (10) is a mass spectrometer.

9. The method according to claim 8, wherein the mass spectrometer is a quadrupole mass spectrometer.

10. The method according to any one of the preceding claims, including the further step of performing a cleaning cycle in the leak testing system (1) between a leak test cycle and the following one by using an inert gas.

## Patentansprüche

1. Verfahren zur Leckprüfung einer Zelle (2) einer Batterie, wobei die Zelle (2) versiegelt ist und Komponenten und Substanzen, die zum Betrieb der Batterie nötig sind, umfasst, mittels eines Leckprüfsystems (1), das eine Unterdruckkammer (7) und ein Detektions- und Messmittel (10) umfasst, wobei das Verfahren die folgenden Schritte nicht notwendigerweise in dieser Reihenfolge umfasst:

- Programmieren des Detektions- und Messmittels (10), Gase und/oder Dämpfe zu detektieren, die aus der Zelle (2), die geprüft werden soll, austreten können, wobei die Gase und/oder die Dämpfe von den Komponenten und/oder den Substanzen in der Zelle (2) stammen;
- Positionieren der Zelle (2) derart, dass sich mindestens ein Abschnitt der Zelle (2) in der Unterdruckkammer (7) befindet,
- Versiegeln der Unterdruckkammer (7);
- Verringern des Drucks in der Unterdruckkammer zu einem niedrigeren Pegel als dem Pegel des Drucks in der Zelle (2), die geprüft werden soll, wobei der niedrigere Pegel derart ist, dass die Gase und/oder die Dämpfe (8) aus der Zelle (2) austreten, falls ein Leck vorhanden ist;
- Detektieren der Gase und/oder der Dämpfe (8) mittels des Detektions- und Messmittels (10) und
- Identifizieren des Vorliegens von Lecks durch Vergleichen von Werten, die den detektierten Gasen und/oder Dämpfen entsprechen, mit vorgegebenen Schwellenwerten,

**dadurch gekennzeichnet, dass**, nachdem die zu prüfende Zelle (2) positioniert worden ist und der Druck in der Unterdruckkammer (7) verringert worden ist und bevor die Gase und/oder die Dämpfe (8) detektiert werden, eine vorläufige Prüfung durchgeführt wird, um zu prüfen, dass der Druckpegel in der Unterdruckkammer (7) aufrechterhalten wird, um eine Verunreinigung des Leckprüfsystems (1) zu verhindern, wobei die vorläufige Prüfung die folgenden Schritte umfasst:

- Überwachen über einen geeigneten Zeitraum des Drucks in der Unterdruckkammer (7), während die Verbindung zwischen der Unterdruckkammer (7) und dem Detektions- und Messmittel (10) geschlossen gehalten wird; und
- Unterbrechen der Leckprüfung, falls der Druck in der Unterdruckkammer (7) wesentlich zunimmt, weil ein großes Leck in der Zelle (2) vorhanden ist.

2. Verfahren nach Anspruch 1, wobei im Schritt des Verringerns des Drucks in der Unterdruckkammer (7) der Druckpegel derart ist, dass die Gase und/oder die Dämpfe (8) in der Zelle (2) erzeugt werden.

3. Verfahren nach Anspruch 1 oder Anspruch 2, wobei die detektierten Gase Gase sind, die in der Zelle (2) während eines Bildungsprozesses, dem die Zelle (2) unterworfen wird, erzeugt werden.

4. Verfahren nach Anspruch 1 oder Anspruch 2, wobei die detektierten Gase Gase sind, die in der Zelle (2) spontan erzeugt werden.

5. Verfahren nach einem der vorhergehenden Ansprüche, wobei die Zelle (2), die geprüft werden soll, vollständig in der Unterdruckkammer (7) positioniert ist.

6. Verfahren nach einem der vorhergehenden Ansprüche, wobei dem Schritt der Programmierung des Detektions- und Messmittels (10), Gase und/oder Dämpfe zu detektieren, der Schritt des Identifizierens der Gase und/oder der Dämpfe (8), die das Detektions- und Messmittel (10) detektiert, durch Durchführen einer vorläufigen Prüfung vorangeht.

7. Verfahren nach einem der vorhergehenden Ansprüche, das den weiteren Schritt des Kalibrierens des Detektions- und Messmittels (10) für sämtliche Gase und/oder Dämpfe (8), die detektiert werden müssen, durch Durchführen eines Leckprüfzyklus an einer Beispielzelle, die eine bekannte Leckrate besitzt, umfasst.

8. Verfahren nach einem der vorhergehenden Ansprüche, wobei das Detektions- und Messmittel (10) ein Massenspektrometer ist.

9. Verfahren nach Anspruch 8, wobei das Massenspektrometer ein Quadrupolmassenspektrometer ist.

10. Verfahren nach einem der vorhergehenden Ansprüche, das den weiteren Schritt des Durchführens eines Reinigungszyklus im Leckprüfsystem (1) zwischen einem Leckprüfzyklus und dem folgenden unter Verwendung eines Inertgases umfasst.

**Revendications**

1. Procédé de test de fuite d'un élément (2) d'une batterie, ledit élément (2) étant scellé et comprenant des composants et des substances qui sont nécessaires au fonctionnement de la batterie, au moyen d'un système de test de fuite (1) comprenant une chambre à vide (7) et un instrument de détection et de mesure (10), le procédé incluant les étapes suivantes, pas nécessairement dans cet ordre :

- programmer l'instrument de détection et de mesure (10) pour détecter des gaz et/ou des vapeurs qui peuvent fuir dudit élément (2) à vérifier, lesdits gaz et/ou vapeurs provenant des composants et/ou des substances à l'intérieur de l'élément (2) ;
- positionner ledit élément (2) de telle manière qu'au moins une portion de l'élément (2) soit à l'intérieur de la chambre à vide (7) ;
- sceller ladite chambre à vide (7) ;
- réduire la pression à l'intérieur de la chambre à vide à un niveau inférieur au niveau de pression à l'intérieur de l'élément (2) à vérifier, ledit niveau inférieur étant tel que les gaz et/ou vapeurs (8) fuient dudit élément (2) si une fuite est présente ;

- détecter lesdits gaz et/ou vapeurs (8) au moyen de l'instrument de détection et de mesure (10) ; et

- identifier la présence de fuites en comparant des valeurs correspondant auxdits gaz et/ou vapeurs détectés avec des valeurs seuil prédéterminées ;

**caractérisé en ce que** après que ledit élément (2) à vérifier a été positionné et que la pression à l'intérieur de la chambre à vide (7) a été réduite, avant la détection des gaz et/ou des vapeurs (8) une vérification préliminaire est réalisée pour vérifier que le niveau de pression est maintenu à l'intérieur de la chambre à vide (7) de manière à empêcher la contamination du système de test de fuite (1), ladite vérification préliminaire incluant les étapes consistant à :

- surveiller pendant une période de temps appropriée la pression à l'intérieur de la chambre à vide (7) tout en gardant la liaison fermée entre ladite chambre à vide (7) et l'instrument de détection et de mesure (10) ; et
- interrompre le test de fuite si la pression à l'intérieur de la chambre à vide (7) augmente significativement parce qu'une fuite importante est présente dans l'élément (2).

2. Procédé selon la revendication 1, dans lequel au cours de l'étape de réduction de la pression à l'intérieur de la chambre à vide (7) le niveau de pression est tel que les gaz et/ou vapeurs (8) sont générés à l'intérieur de l'élément (2).

3. Procédé selon la revendication 1 ou la revendication 2, dans lequel lesdits gaz détectés sont des gaz qui sont générés à l'intérieur de l'élément (2) pendant un processus de formation auquel l'élément (2) est soumis.

4. Procédé selon la revendication 1 ou la revendication 2, dans lequel lesdits gaz détectés sont des gaz qui sont générés spontanément à l'intérieur de l'élément (2).

5. Procédé selon l'une quelconque des revendications précédentes, dans lequel ledit élément (2) à vérifier est entièrement positionné à l'intérieur de la chambre à vide (7) .

6. Procédé selon l'une quelconque des revendications précédentes, dans lequel l'étape consistant à programmer l'instrument de détection et de mesure (10) pour détecter les gaz et/ou vapeurs est précédée de l'étape consistant à identifier les gaz et/ou vapeurs (8) que ledit instrument de détection et de mesure (10) détecte en réalisant un test préliminaire.

7. Procédé selon l'une quelconque des revendications précédentes, incluant l'étape supplémentaire consistant à calibrer l'instrument de détection et de mesure (10) pour chacun des gaz et/ou vapeurs (8) qui doit être détecté en réalisant un cycle de test de fuite sur un élément d'échantillon ayant un taux de fuite connu.

8. Procédé selon l'une quelconque des revendications précédentes, dans lequel l'instrument de détection et de mesure (10) est un spectromètre de masse.

9. Procédé selon la revendication 8, dans lequel le spectromètre de masse est un spectromètre de masse quadripôle.

10. Procédé selon l'une quelconque des revendications précédentes, incluant l'étape supplémentaire consistant à réaliser un cycle de nettoyage dans le système de test de fuite (1) entre un cycle de test de fuite et le suivant à l'aide d'un gaz inerte.

**FIG. 1**

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101198857 B1

- WO 9946572 A1